(19) **Europäisches Patentamt**
**European Patent Office**
**Office européen des brevets**

(11) **EP 2 422 741 B1**

(12) **EUROPEAN PATENT SPECIFICATION**

(45) Date of publication and mention
of the grant of the patent:
**23.01.2013 Bulletin 2013/04**

(51) Int Cl.:
**A61C 13/00** *(2006.01)*

(21) Application number: **10009047.1**

(22) Date of filing: **31.08.2010**

(54) **Computer-implemented method for digitally designing a dental restoration**

Computerimplementiertes Verfahren für die digitale Planung eines Zahnersatzes

Procédé informatique pour concevoir de manière numérique une prothèse dentaire

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**29.02.2012 Bulletin 2012/09**

(73) Proprietor: **Straumann Holding AG**
**4002 Basel (CH)**

(72) Inventors:
• **Manzer, Martin**
**12489 Berlin (DE)**
• **Lawitschka, Uwe**
**12489 Berlin (DE)**
• **Meier, Marcus**
**4002 Basel (CH)**

• **Welge, Melanie**
**82166 Gräfelfing bei München (DE)**

(74) Representative: **Grünecker, Kinkeldey,**
**Stockmair & Schwanhäusser**
**Leopoldstrasse 4**
**80802 München (DE)**

(56) References cited:
**US-A1- 2009 246 726**

• **STEINBRECHER T ET AL: "Dental inlay and onlay construction by iterative laplacian surface editing", COMPUTER GRAPHICS FORUM JULY 2008 BLACKWELL PUBLISHING LTD GB,, vol. 27, no. 5, 1 July 2008 (2008-07-01), pages 1441-1447, XP002616277,**

EP 2 422 741 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a computer-implemented method for digitally designing a dental restoration.

The design of tooth restorations requires a deep dental knowledge. The challenge of computer aided tooth design lies in the computation of a functional correct morphology of the missing chewing surface. A solution must be robust and automated such that the user actually benefits from time saving and better results.

The article "Dental inlay and onlay construction by iterative Laplacian surface editing" by T. Steinbrecher et al. (Eurographics Symposium on Geometry Processing 2008; July 2 - 4, 2008 in Copenhagen, Denmark; Volume 27(2008), No. 5; p. 1441 - 1447) discloses that a model tooth may be adapted by using Laplacian surface editing to a patient's tooth. After adaptation, the part of the model tooth lying above the cavity will be joined with the cavity mesh to create the actual inlay reconstruction. The part of the model tooth lying above the healthy part of the tooth should be adapted to the remaining tooth surface. The model tooth is segmented into parts that lie "above cavity" or "on surface".

From each vertex of the model tooth that is not yet clarified as "above cavity", two rays are cast, one towards the centre of the tooth to be reconstructed, and one away from it. Thereby all rays by definition pass through the centre of the tooth to be reconstructed. Only the closest hit point is considered. The hit points are then classified according to their location as "above cavity", "on surface", or "undefined".

The adaptation is an iterative process, alternating segmentation and deformation. For vertices classified as "on surface", ray collisions with the tooth to be reconstructed are used again.

As the rays are cast starting from a vertex of the model tooth for each iteration also the segmentation has to be performed again. This is because by starting from a vertex of the model tooth, it is unknown where the location of a hit point on the tooth to be reconstructed will be. Even before the first deformation of the model tooth it needs to be segmented.

After the adaptation is completed, all vertices classified as "on surface" and not having a neighbour that is classified as "above cavity" will be removed and thus a mesh that covers the cavity remains wherein its boundary is aligned to the preparation margin.

It is the object of the present invention to enable an automatic design of dental restorations by means of Laplacian surface deformation resulting in stable and reliable data for a dental restoration.

This object is achieved with a computer-implemented method according to claim 1. Preferred embodiments of the invention are disclosed in the dependent claims. All the method steps described in the following may be performed automatically and do not necessarily need the interaction of a user.

The present invention relates to a computer-implemented method for digitally designing a dental restoration, such as a inlay, onlay, veneer, or partial crown or the like, for a rest tooth, wherein the rest tooth is described by data of the rest tooth, the data of the rest tooth being achieved by scanning of a dental model of the rest tooth or by directly scanning a patient's rest tooth, and wherein a tooth template is described by data of the tooth template, the tooth template representing a digital representation of a generic tooth. A normal direction to a surface at a point is the same as a normal direction to a tangent plane to said surface at said point. The method comprises the step of automatically deforming the tooth template by means of Laplacian surface deformation such that a prepared part of the rest tooth is covered (matched) by a portion of the tooth template. The Laplacian surface deformation comprises automatically generating a line which is going through a point on the surface of the rest tooth or the tooth template and which is directed along the normal direction at said point. When the line intersects with the tooth template and with the surface of the rest tooth, automatically choosing the intersection point of the line with the tooth template as handle and the intersection point with the surface of the rest tooth as target and automatically deforming the tooth template.

A rest tooth may be considered as a tooth of a patient and/or (digital) data describing it, wherein said tooth is not complete, i.e. has missing parts, due to caries, dental preparation like milling and so on. For the processes in the computer-implemented method digital data of the rest tooth are used, that have been achieved by scanning of a dental model of the rest tooth or by directly scanning the patient's rest tooth. The surface of the rest tooth may be described by a mesh of triangles, wherein the triangles may all be the same or wherein the triangles may have different shapes. It is also possible to use other polygons and/or use different polygons (e.g. like triangles and pentagons) in one mesh.

The rest tooth may have a prepared surface/prepared part which in general means that this surface/part has been prepared, e.g. by a dentist by milling. Preferably, the prepared surface/part is provided with a dental restoration. Further, the rest tooth has an unprepared surface/unprepared part at which the intact surface of the rest tooth is present. In some cases a non-intact surface of the rest tooth are considered as "unprepared", e.g. in case no dental restoration should or will be provided to this surface of the rest tooth.

A tooth template represents a digital representation of a generic tooth, wherein tooth templates according to the different tooth types (molar, premolar, incisor etc.) are provided. The surface of the tooth template may be described by a mesh of triangles, wherein the triangles may all be the same or wherein the triangles may have different shapes. It is also possible to use other polygons and/or use different polygons (e.g. like triangles and pentagons) in one mesh.

The data of the tooth template may comprise a polygonal mesh describing the surface of the tooth template and the Laplacian surface deformation may further comprise using a handle that lies inside a polygon of the mesh of the tooth template.

The normal direction of a point within a triangle is defined as the normal of that triangle or an average of the normal of this triangle and neighbouring triangles. A normal direction at a vertex (corner of a triangle) is defined by the average of the normal directions of the triangles that have this vertex as a corner point or of triangles that lie within a sphere or volume of a predefined size (and/or shape) around the vertex. The average may be a weighted average wherein the weight depends on the size of a triangle or it may be an unweighted average where all triangles considered for averaging are taken into account with equal weights.

Moreover, automatically deforming the tooth template in the Laplacian surface deformation may further comprise moving the handle towards the target.

It has been found that by using a handle that lies in a direction normal to the surface at the point of the target or a target that lies in a direction normal to the surface at the point of the handle yields very robust and reliable results using the Laplace surface deformation. By having handles and targets aligned in a direction normal either to the surface of the rest tooth or normal to the surface of the tooth template a surprisingly good choice of a handle and a corresponding target is found which allows for deformation of a template into a proper tooth surface.

It turns out to be of advantage to firstly define a target on the surface of the rest tooth and then to identify the corresponding handle in a direction normal to the surface of the rest tooth for various reasons. It can be assured that a target is provided at specific points of the surface of the rest tooth which are of particular interest. Such a point may e.g. be on the preparation margin. By firstly choosing the target on the surface of the rest tooth and then a corresponding handle it can be assured that a point of particular importance is taken into account for the surface deformation. If first the handles are defined and afterwards the corresponding targets are chosen, then it can not be assured that specific points of the surface of the rest tooth which are of particular interest are taken into account. The preparation margin defines the border line of the prepared surface and the unprepared surface of the rest tooth that should be provided with a dental restoration. Taking points of the preparation margin into account for the surface deformation results in a smooth transition at the preparation margin, i.e. a smooth transition between the dental restoration and the rest tooth at the preparation margin.

For the targets and for the handles any point of a surface can be used. This means that a point on a surface of the rest tooth or a point on the template can be either a point inside a triangle (or polygon in general) or may be a corner of a triangle (or polygon in general) in case the surface of the rest tooth and the template are described by a mesh comprising triangles (or polygons in general). This on the one hand gives more flexibility in the choice of targets and handles as compared to the prior art but additionally allows for triangles (or polygons in general) of largely different sizes to be used. There is no need to have a large number of relatively small triangles in order to describe the surface of the rest tooth or the tooth template which assures that there is a sufficiently high density of vertices in order to perform a reasonable surface deformation. Since in the present method also points inside a triangle may be used there is no need for a large number of vertices and triangles of largely different size may be used. E.g. triangles having a two dimensional size of their surface 10 times or 50 times the two dimensional size of the surface of the smallest triangle of the data set can be used. This allows for reduced data sets for the digital description of the surface of the rest tooth and of the template in comparison to the prior art.

All vertices of a portion of a mesh describing the rest tooth portion that is considered for the Laplacian deformation can be used as targets or only a portion (subset thereof). Also at least one point of each triangle (polygon) of a mesh describing the rest tooth portion that is considered for the Laplacian deformation can be used as targets or only a portion (subset) of the triangles.

The Laplacian surface deformation may further comprise iteratively performing the deformation of the tooth template.

By having the targets defined on the surface of the rest tooth the handles can be identified without significant computational effort between two iterations. In particular there is no need for a new separate segmentation of the template as in the prior art since the targets, which are used for defining the position of handles do not necessarily change from one iteration to another. In the cited prior art after each iteration a new segmentation has to be carried out which is computationally very expensive.

Iteratively performing the deformation of the tooth template may use a handle weight that is increased as the iteration process proceeds, preferably starting with a pre-defined minimum handle weight.

By iteratively increasing the weight, the general position of the tooth template may be first adjusted to the outer surface of the rest tooth, thus the shape preservation is predominant and self-intersection is avoided. As the iteration proceeds and weights increase, the method finds correct handles and the template is more and more deformed towards the surface of the rest tooth.

The method may further comprise the step of defining the handle weight for the deformation step as a product comprising a global weight increasing with each iteration step, and one or two of a distance weight decreasing with increasing distances between the target and the handle, wherein the dependence of the distance weight on the distance may vary with each iteration step, or an angle weight that depends on the angle between the normal direction of the target and the normal direction of the handle.

The global weight may increase with the iteration process and deforms the tooth template more and more. To further penalize false handle selections both distance and normal derivation between the target and the handle are taken into account.

In order to allow for a general position of the template, weights are independent from the distance at the beginning of the iteration process. As the iteration proceeds large distances are penalized more and more by reducing the respective handle weights. This reduces the impact of false projections. The less the distance, the more certain it is that a correct projection is found.

A result of the method according to the invention is that the transition between the rest tooth and the tooth template is as smooth as possible, which means that sharp edges and transitions which achieve high loads are prevented.

The method may further comprise the step of automatically extracting a portion of the tooth template by digitally cutting the deformed tooth template along a preparation margin.

For designing the dental restoration, it is sufficient to use the deformed tooth template that is located within the preparation margin as this is the area that should be provided with the dental restoration in order to achieve a complete tooth structure.

Moreover, the method may comprise the step of combining data representing the cut out deformed tooth template portion with data representing the surface of the rest tooth inside the preparation margin to provide a three-dimensional design of the dental restoration.

The surface of the rest tooth has been scanned in order to get a corresponding data set. The rest tooth comprises prepared regions, i.e. regions where original tooth material is missing either by medical defects and/or milling. The preparation margin defines the border line between prepared regions of the rest tooth and regions in which the rest tooth has its original shape. Thus, for the definition and thus also for the design of a complete dental restoration both the cut out deformed tooth template and the surface of the rest tooth inside the preparation margin have to be known in order to define and thus be able to design the shape of the dental restoration.

Further, a cement gap and/or a spacer gap may be added to the data representing the surface of the dental restoration that would be in contact with or facing towards the rest tooth, the so-called lower surface.

The cement gap is filled with dental cement or the like in order to fix a physical dental restoration to a rest tooth of a patient. This gap is provided between the dental restoration and the surface of the rest tooth by providing a dental restoration with dimensions smaller than the space available at the rest tooth. The thickness of the cement gap is between 10 and 60 $\mu$m, or may be smaller or thicker, e.g. depending on the grain size of the dental cement and/or the thickness of the dental restoration.

The spacer gap may be provided in addition to the cement gap (or alone), e.g. to provide a broadening of the cement gap at positions away from the preparation margin, e.g. to increase the amount of cement that is used for fixing the dental restoration.

The adding may be performed by applying an offset along the normal directions of points on the lower surface, such as vertices, wherein preferably the normal directions are averaged about a defined region around each point.

A cement gap is required to provide space for the cement that is needed to securely attach a physical dental restoration to a rest tooth of a patient. An additional spacer gap may be provided. Next to the preparation margin only the cement gap may be provided and at a first predefined distance to the preparation margin a smooth transition from the cement gap to the spacer gap may be provided, reaching some predefined spacer gap thickness at a second predefined distance from the preparation margin.

The method may further comprise the step of positioning the tooth template, which preferably is selected from a data base comprising one or more tooth templates for one or more tooth types, with respect to rest tooth by aligning the rest tooth and the tooth template to coincide in x direction and in z direction.

Both the coordinate systems of the rest tooth and the tooth template have the x direction in buccal (vestibular) direction, the y direction along the mesial-distal axis and the z direction in occlusal direction.

The position of the tooth template is adjusted to a maximum z value that is defined by a highest extend of one or more neighbouring teeth. A plane is drafted perpendicular to the occlusal axis of said rest tooth and its maximum value of height of the rest tooth of any of the neighbouring tooth. Then the tooth template is adjusted such that it has at least one common point with this plane but does not intersect the plane. In case no neighbouring tooth or teeth is or are present the plane is provided at a z value which is offset by predefined value from the top value of the rest tooth.

Moreover, the tooth template may be scaled to x and y direction according to the horizontal extent of the prepared surface of the rest tooth, wherein preferably no scaling in z direction is performed.

Due to the local coordinate systems of rest tooth and tooth template, the translation of the tooth template to adjust it to a defined height and the scaling in buccal direction, an automated positioning of the tooth template (prior to the Laplace surface deformation) is achieved.

Preferred embodiments of the invention will be illustrated with reference to the enclosed figures. In the figures:

Figure 1 shows a prepared tooth with surrounding teeth and a tooth template;

Figure 2 shows a prepared tooth, a tooth template, first and second bounding boxes;

Figure 3 shows rays to select handles and targets;

Figure 4a shows the result of a surface deformation in a single step;

Figure 4b shows the result of a surface deformation using an iterative process with successively increasing handle weights;

Figure 5 shows cement gap and spacer gap; and

Figure 6 shows prepared tooth, deformed tooth and minimal surface.

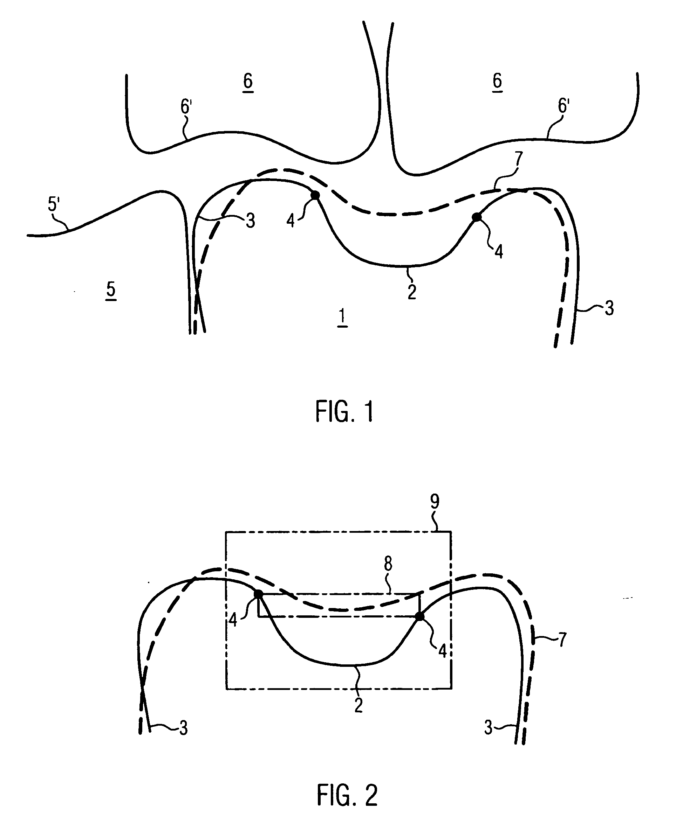

The schematic representations shown in Figures 1 to 6 are displayed for example on a computer display or the like, wherein data sets are provided corresponding to the depicted objects.

Figure 1 shows schematically a rest tooth 1 comprising a prepared region, the so-called lower surface 2, which is separated from the unprepared rest tooth, the so-called outer surface 3, by the preparation margin 4. The depicted rest tooth 1 has a neighbouring tooth 5 with an approximal surface 5' and two opposite teeth 6 with occlusal surfaces 6'. In order to provide the rest tooth 1 with a dental restoration a tooth template 7 is used. The tooth template 7 is positioned with respect to the rest tooth 1 such that the local coordinate systems of the rest tooth 1 and the tooth template 7 coincide in x direction and in z direction. For example, the x direction is given by the buccal direction, the y direction by the mesial-distal axis and the z direction by the occlusal direction.

The rest tooth 1 shown in figure 1 comprises a cavity as prepared region, which means that the dental restoration to be designed is an inlay. However, a rest tooth may also have prepared regions extending on surface regions, such as one or more cusp tips, which means that the dental restoration to be designed is an onlay or partial crown. A veneer has to be designed when a thin layer of the tooth surface has to be provided with a dental restoration.

As shown in figure 2, for performing the deformation of the tooth template 7 a first bounding box 8 is defined by the preparation margin 4. A second bounding box 9 is defined in a predefined distance from the first bounding box 8 such that part of the tooth template 7 and part of the outer surface 3 of the rest tooth 1 are cut out. By using the second bounding box 9 the deformation process is simplified and accelerated as not the whole tooth template 7 will be deformed but only the part of it which is located within the second bounding box 9. A predefined distance to the first bounding box 8 may be kept in order to avoid cut out fissures in the tooth template 7. However, for performing the deformation of the tooth template 7, the use of bounding boxes is not necessarily required.

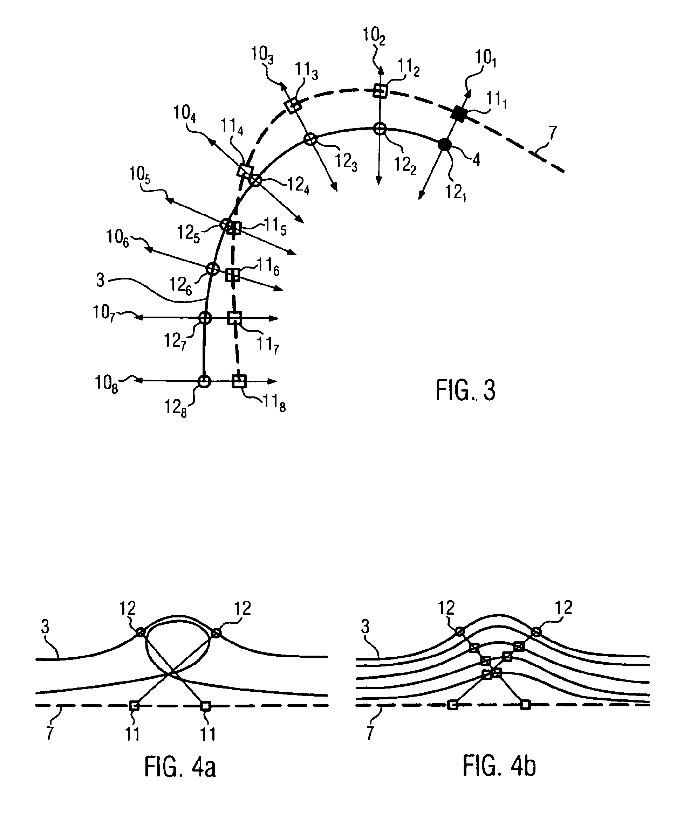

For deforming the tooth template 7 such that the cavity in the rest tooth 1 is covered by a suitable part of the tooth template 7, an algorithm is used, wherein as shown in figure 3, lines $10_1$ - $10_8$ are cast each going through a point on the surface of the rest tooth, each of the lines being directed along the normal direction of the point of the surface of the rest tooth. The lines are cast starting at points on the outer surface 3 of the rest tooth 1 or starting at points on the preparation margin 4.

If an intersection of a line $10_1$ - $10_8$ with the tooth template 7 is observed the respective intersection point on the template 7 are chosen as handle $11_1$ - $11_8$ (squares) and the respective point on the rest tooth 1 as respective target $12_1$ - $12_8$ (circles). If an intersection of a line $10_1$ - $10_8$ with the tooth template 7 is observed in both positive and negative normal directions, the intersection point with the smaller distance to the point the line going through of the surface of the rest tooth 1 is chosen.

The open circles $12_2$ - $12_8$ correspond to targets on the outer surface 3 of the rest tooth 1 having respective handles on the tooth template 7 indicated by the open squares $11_2$ - $11_8$. The filled circle $12_1$ corresponds to a point on the preparation margin 4 and the respective handle on the tooth template 7 is indicated by the filled square $11_1$.

After having determined the handles $11_1$ - $11_8$ on the tooth template 7 and respective targets $12_1$ - $12_8$ on the rest tooth 1, the deformation of the tooth template 7 is performed as an iterative process.

The deformation of the tooth template 7, according to the targets $12_1$ - $12_8$ is performed in the unprepared region of the rest tooth 1 and at the preparation margin 4. As the algorithm starts at points on the surface of the rest tooth 1 and the algorithm uses these points as targets $12_1$ - $12_8$, it is not required to make a determination after each iteration step whether a point of the tooth template 7 which is a handle for the next iteration step lies above the prepared or the unprepared region of the rest tooth 1 or above the preparation margin 4. The algorithm is considered to deform the tooth template 7 by pulling the tooth template 7 towards the rest tooth 1 and as the location of the targets $12_1$ - $12_8$ on the rest tooth 1 is known, it is also known that a handle on the tooth template 7 will be deformed towards this location.

In the article of T. Steinbrecher et al., the deformation vectors are determined starting from vertices on the model tooth and thus after each iteration step a new classification of the hits on the surface of the rest tooth has to be performed.

Handle weights increase form low values to bigger values successively during the iterative process. Figures 4a and 4b illustratively show the result when performing the deformation in a single step and when performing the deformation using an iterative process, respectively. When using a single step for performing the deformation, self-intersections are produced resulting in a deformed surface that is not usable for a dental restoration. However, when the iteration starts with low handle weights, the shape preservation characteristic of the Laplacian surface deformation is predominant and self-intersection is avoided. As shown in figure 4b the deformed tooth template 7 is adjusted to fit the outer surface 3.

Once new handles are selected, the new deformed shape of the tooth template has to be calculated. This is achieved by solving an optimization problem, wherein a global deformation energy E may be constructed that measures how much a deformed triangle mesh with vertex coordinates $p_1', ..., p_n'$ differs from its initial rest pose with vertex coordinates $p_1, ..., p_n$. The deformation energy E integrates locally defined changes of the shape. The local shape of vertex i is described by the discrete Laplacian $\Delta p_i = 2H_i n_i$ which is a three dimensional vector that points in the direction of the unit length vertex normal $n_i$ and has a magnitude twice the mean curvature $H_i$.

The global deformation energy is formulated as

$$E(p_1',...p_n') = \sum_i A_i \left\| \delta_i' - \delta_i \right\|^2 + \sum_j w_j \left\| h_j' - h_j \right\|^2, \tag{1}$$

wherein the left term measures the weighted squared distance between local shapes in the deformed mesh and local shapes in the rest pose. The right term of equation 1 measures the weighted squared distance between the positions of the deformed handles $h_j' = h_j(p_1',...,p_n')$ and their targets $h_j = h_j(P_1...,P_n)$. $A_i$ is the two dimensional Voroni area around the vertex i and $w_j = 1$.

The discrete Laplacian is computed as

$$\delta_i = \frac{1}{2 \cdot A_i} \cdot \sum (\cot \alpha_{ij} + \cot \beta_{ij}) \cdot (p_i - p_j), \tag{2}$$

wherein vertices j are the one-ring neighbours of vertex i and $\alpha_{ij}$ and $\beta_{ij}$ are the two angles opposite to the edge $(i, j)$. In the presence of obtuse triangles, the respective Voroni region extends beyond the one-ring neighbours of the vertex. To guarantee a perfect tiling of the surface without overlapping the Voroni area is truncated, resulting in the Laplacian of a deformed vertex being:

$$\delta_i' = \frac{1}{2 \cdot A_i'} \cdot \sum (\cot \alpha_{ij}' + \cot \beta_{ij}') \cdot (p_i' - p_j'). \tag{3}$$

The handles j are allowed to be at any point of the triangle surface (and not only being vertices) by using barycentric coordinates $(\lambda_{j1}, \lambda_{j2}, \lambda_{j3})$ of the respective triangle $(p_{j1}, p_{j2}, p_{j3})$:

$$h_j(p_1,...,p_n) = \lambda_{j1} p_{j1} + \lambda_{j2} p_{j2} + \lambda_{j3} p_{j3}, \tag{4}$$

where

$$\lambda_{jk} = \frac{\left\| (p_{ja} - h_j) \times (p_{jb} - h_j) \right\|}{\left\| (p_{j2} - p_{j1}) \times (p_{j3} - p_{j1}) \right\|} \qquad (5)$$

for $\alpha \neq b$, $a \neq k$ and $b \neq k$.

It is assumed that areas and angles are preserved such that $\alpha'_{ij} = \alpha_{ij}$, $\beta'_{ij} = \beta_{ij}$ and $A'_i = A_i$ and hence, the Laplacian operator $\Delta p'_i$ can be described linearly in the deformed vertex coordinates. Thus, the global deformation energy E has a quadratic form

$$E(p') = \left\| \sqrt{M}(Lp' - \delta) \right\|^2 + \left\| \sqrt{W}(Cp' - h) \right\|^2, \qquad (6)$$

where L is the matrix form of the Laplacian operator, C encapsulates the barycentric coordinates, $\delta$ is a vector with the x, y or z coordinates of Laplacian $\delta_i$, h is a vector containing the respective handle coordinates, M and W are diagonal matrices containing the weights $A_i$ and $w_i$, respectively, and p' is the vector with the deformed vertex coordinates. The deformed tooth template can be reconstructed by a minimization in the linear least square sense.

The global deformation energy can be reformulated to:

$$E(p') = p'^T (L^T ML + C^T WC) p' - 2 p'^T (L^T M\delta + C^T Wh) + \delta^T M\delta + h^T Wh. \qquad (7)$$

The minimization

$$\frac{\partial}{\partial p'} E(p') = 0 \qquad (8)$$

leads to the normal equations

$$(L^T ML + C^T WC) p' = L^T M\delta + C^T Wh \qquad (9)$$

which are basically a linear system of size $n \times n$.

For the Laplacian surface deformation of the tooth template 7 the handleweights $handlew_{g,l,p,D}(i,d,\alpha)$ may be defined by the following formula:

$$handlew_{g,l,p,D}(i,d,\alpha) = globalw_{g,l,p}(i) \cdot distw(i,d)_{D,l} \cdot anglew(\alpha). \qquad (10)$$

$$globalw_{g,l,p}(i) = g \cdot \left( \frac{i}{l} \right)^p, \qquad (11)$$

wherein $g \geq 1$ is a global weighting factor, $l \geq 1$ is the number of iteration steps, $i \geq 1$ is the current iteration step and the power $p \geq 1$ determines the shape of the function.

The distance weighting function is defined by

$$distw(i,d)_{D,I} = 1 - wendland_{4,I}(I-i) + \begin{cases} 0 & for \quad d \geq D \\ wendland_{4,I}(I-i) \cdot wendland_{4,D}(d) & else \end{cases}, \quad (12a)$$

or preferably by

$$distw(i,d)_{D,i} = wendland_{8,I}(i) + \begin{cases} 0 & for \quad d \geq D \\ (1 - wendland_{8,I}(i)) \cdot wendland_{4,D}(d) & else \end{cases}, \quad (12b)$$

wherein $d \geq 0$ is the distance, $D \geq 0$ is the support.

The Wendland weighting function is defined by

$$wendland_{p,r}(x) = \left(1 - \frac{x}{r}\right)^p \cdot \left(\frac{p \cdot x}{r} + 1\right) \quad (13)$$

wherein $r \geq 0$ is the radius of support and $p \geq 2$ determines the shape of the function.

The angleweight is defined by the following formula:

$$anglew(\alpha) = \begin{cases} 0 & for \quad \alpha \geq \pi/2 \\ wendland_{4,\pi/2}(a) & else \end{cases}, \quad (14)$$

wherein $\alpha \in [0,\pi]$ is the angle between the normal direction of the target and the normal direction of the handle.

After applying a fixed number of iterations $i$ a tooth template 7 exists that has been deformed such that it describes the unprepared regions of the rest tooth 1. This part of the tooth template 7 that lies inside the preparation margin 4 describes the surface of the dental restoration to be designed, wherein this surface represents the surface of the dental restoration that will not be hidden by the rest tooth after attaching the dental restoration to the rest tooth 1. This surface may be e.g. a part of the chewing surface of a molar.

For the final design of the dental restoration the part of the tooth template 7 inside the preparation margin is relevant. To extract this part, the so-called deformed tooth template 18, from the tooth template 7, a virtual cut along the preparation margin 4 is performed, such that only data being related to the tooth template 7 inside of the preparation margin is taken into account for further processes.

After finalizing the deformation of the tooth template 7, the surface of the dental restoration describing the lower surface 2 is adapted by adding a cement gap 13 and a spacer gap 14, wherein a at some distance 15 from the preparation margin 4 a spacer transition 16 may exist. For example, an offset function is chosen to achieve a smooth transition from the cement gap 13 to the spacer gap 14:

$$offset_{b,t,c,s}(d) = c + \begin{cases} 0 & for \quad d \leq b \\ s & for \quad d \geq b+t \\ \frac{s}{2} \cdot \left(1 + \sin\left(\pi \cdot \frac{d-b}{t} - \frac{\pi}{2}\right)\right) & else \end{cases}, \quad (15)$$

wherein d is the geodesic distance to the preparation margin 4, $b$ is the distance of the spacer gap 14 to the preparation margin 4, $t$ is the spacer gap transition 16, c is the thickness of the cement gap 13 and s is the thickness of the spacer gap 14.

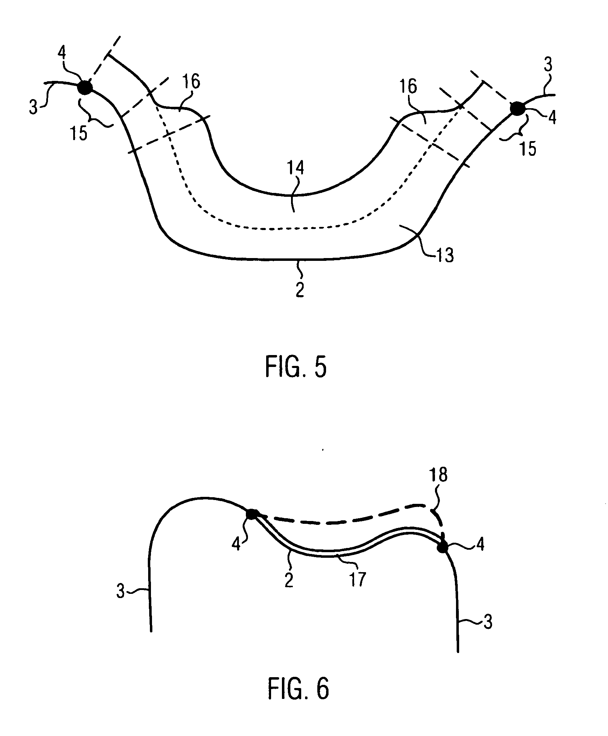

For the manufacturing of the dental restoration it is required that a certain minimum wall thickness is ensured. Therefore, a minimal surface 17, as shown in figure 6, is constructed and every vertex of the deformed tooth template 18 is required to lie above this minimal surface 17. The minimal surface 17 is constructed by an offset on the rest tooth 1 and the mesh of the cavity to be provided with the dental restoration.

To correct the deformed tooth template 18 with respect to the minimal surface 17, rays (i.e. lines) are cast from vertices of the deformed tooth template 18 along the positive normal direction of the respective vertex. A vertex is below the minimum wall thickness if the ray belonging to said vertex intersects a mesh triangle of the minimal surface and the difference between the normal direction of the vertex and the normal direction of the triangle is less than $\pi/2$. In such a case, a respective handle is selected and the intersection point on the minimum surface 17 is selected as target. Handle weights are set in the same manner as for the deformation process of the tooth template 7, but the distance weighting is described independent from the current iteration as no general positioning is required.

In order to achieve a good correction result, first the deformation is applied to the boundary of the deformed tooth template 18 while fixing handles in the interior using large handle weights. In a second deformation step, the boundary is fixed and the interior is adjusted to the minimal surface 17.

One exemplary for an offset to define the minimal surface is given by

$$o_{b,w,W}(d) = \begin{cases} 0 & for \quad d \le 0 \\ b\sqrt{1-(1-\dfrac{d}{b})^2} & for \quad d > 0, d \le b \\ w & for \quad d \ge W \\ b+\dfrac{w-b}{2}\cdot\left(1+\sin\left(\pi\cdot\dfrac{d-b}{W-b}-\dfrac{\pi}{2}\right)\right) & else \end{cases} \qquad (16)$$

wherein $b > 0$ is a predefined wall thickness at the boundary and $w > b$ a predefined wall thickness at a geodesic distance $W > b$ from the boundary. This function guarantees a minimum wall thickness b at the boundary and ensures that deformed tooth template 18 forms at least almost a rectangular angle at the preparation margin 4 with respect to the lower surface 2 of rest tooth 1.

Depending on the shape of the transition between the lower surface 2 and the unprepared part of the rest tooth 1, the thickening near the preparation margin 4 has different forms. In case, the transition forms almost a rectangular angle, then almost no or none thickening can be observed and a flat and smooth transition between the corrected, deformed tooth template (i.e. the deformed tooth template 18 that has been corrected taking into account a minimal thickness) and the unprepared part of the rest tooth 1 is provided. In case, the transition has an angle smaller than 90°, then a thickening is provided ensuring that the dental restoration will have a sufficient thickness also near the preparation margin.

Another possibility for defining a minimal surface 17 is to apply an offset along the normal direction of each vertex of the lower surface 2 (wherein preferably the cement gap 13 and/or spacer gap 14 has already be added to the lower surface 2). Such an offset has a predefined value over the whole range of the lower surface 2 or the offset has smaller values near the preparation margin 4 and larger values at some predefined distance from the preparation margin 4 or vice versa. Instead of taking into account the normal direction of each vertex, an average of several normal directions of several vertices are determined and then an offset is applied to this averaged normal direction.

**Claims**

1. Computer-implemented method for digitally designing a dental restoration for a rest tooth (1), wherein the rest tooth (1) is described by data of the rest tooth (1), the data of the rest tooth (1) being achieved by scanning of a dental model of the rest tooth (1) or by directly scanning a patient's rest tooth, and wherein a tooth template (7) is described by data of the tooth template (7), the tooth template (7) representing a digital representation of a generic tooth, the method comprising the step of:

   - automatically deforming the tooth template (7) by means of Laplacian surface deformation such that a prepared part of the rest tooth (1) is covered by a portion of the tooth template (7);
   **characterized in that**
   the Laplacian surface deformation comprises:
   - automatically generating a line which is going through a point on the surface of the rest tooth (1) or the tooth template (7) and which is directed along the normal direction at said point, which is the normal direction to the tangent plane of said point or the surface of the rest tooth (1) or the tooth template (7);
- when the line intersects with the tooth template (7) and with the surface of the rest tooth (1), automatically choosing the intersection point of the line with the tooth template (7) as handle (11) and the intersection point with the surface of the rest tooth (1) as target (12); and
- automatically deforming the tooth template (7).

2. The computer-implemented method according to claim 1, wherein the point on the surface of the tooth template (7) is a vertex or a point inside a triangle of a polygonal mesh that describes the surface of the tooth template and wherein the normal direction at a vertex is defined by the average of normal directions of triangles that have said vertex as a corner or of triangles that lie within a sphere or volume of a predefined size around said vertex.

3. The computer-implemented method according to claims 1 or 2, wherein the data of the tooth template comprise a polygonal mesh describing the surface of the tooth template and wherein the Laplacian surface deformation further comprises using a handle (11) that lies inside a polygonal of the mesh of the tooth template (7).

4. The computer-implemented method according to claims 1 to 3, wherein automatically deforming the tooth template in the Laplacian surface deformation further comprises moving the handle (11) towards the target (12).

5. The computer-implemented method according to claims 1 to 4, wherein the Laplacian surface deformation further comprises automatically iteratively performing the deformation of the tooth template (7).

6. The computer-implemented method according to claim 5, wherein automatically iteratively performing the deformation of the tooth template (7) uses a handle weight that is increased as the iteration process proceeds, preferably starting with a predefined minimum handle weight.

7. The computer-implemented method according to claim 6, wherein the method further comprises the step of defining the handle weight for the deformation as a product comprising a global weight increasing with each iteration step and one or two of:

- a distance weight decreasing with increasing distances between the target (12) and the handle (11), wherein the dependence of the distance weight on the distance may vary with each iteration step; or
- an angle weight that depends on the angle between the normal direction of the target (12) and the normal direction of the handle (11).

8. The computer-implemented method according to claims 5 to 7, wherein the method further comprises the step of automatically extracting a portion of the tooth template by digitally cutting the deformed tooth template along a preparation margin (4).

9. The computer-implemented method according to claim 8, wherein the method further comprises the step of automatically combining data representing the cut out deformed tooth template portion with data representing the surface of the rest tooth (1) inside the preparation margin (4) to provide data of a three-dimensional design of the dental restoration.

10. The computer-implemented method according to claim 9, wherein the method further comprises the step of automatically adding a cement gap (13) and/or a spacer gap (14) to the data representing the surface of the dental restoration that would be in contact with the rest tooth (1), the so-called lower surface (2),

11. The computer-implemented method according to claim 10, wherein the adding is performed by automatically applying an offset along the normal directions of points, such as vertices, of the lower surface (2), wherein preferably the normal directions are averaged about a defined region around each point.

12. The computer-implemented method according to claims 1 or 2, wherein the method further comprises the step of automatically positioning the tooth template (7) with respect to rest tooth (1) by aligning the rest tooth (1) and the tooth template (7) to coincide in buccal direction and in occlusal direction.

13. The computer-implemented method according to claim 12, wherein the method further comprises the step of automatically scaling the tooth template (7) in buccal and in direction of the mesial-distal axis according to the horizontal extent of the prepared surface of the rest tooth (1), wherein preferably no scaling in occlusal direction is performed.

**Patentansprüche**

1. Computerimplementiertes Verfahren zum digitalen Entwerfen eines Zahnersatzes für einen Restzahn (1), wobei der Restzahn (1) durch Daten des Restzahns (1) beschrieben wird, wobei die Daten des Restzahns (1) durch Scannen eines Zahnmodells des Restzahns (1) oder durch direktes Scannen eines Patientenrestzahns erhalten werden, und wobei eine Zahnvorlage (7) durch Daten der Zahnvorlage (7) beschrieben wird, wobei die Zahnvorlage (7) eine digitale Darstellung eines generischen Zahns darstellt, wobei das Verfahren den Schritt umfasst:

   - automatisches Verformen der Zahnvorlage (7) mittels Laplaceoberflächenverformung, so dass ein präparierter Teil des Restzahns (1) durch einen Anteil der Zahnvorlage (7) bedeckt wird;
   **dadurch gekennzeichnet, dass**
   die Laplaceoberflächenverformung umfasst:
   - automatisches Erzeugen einer Linie, die durch einen Punkt auf der Oberfläche des Restzahns (1) oder der Zahnvorlage (7) geht und die entlang der Normalenrichtung bei besagtem Punkt ausgerichtet ist, welche die Normalenrichtung zu der Tangentenebene bei besagtem Punkt auf der Oberfläche des Restzahns (1) oder der Zahnvorlage (7) ist;
   - wenn die Linie die Zahnvorlage (7) und die Oberfläche des Restzahns (1) schneidet, automatisches Auswählen des Schnittpunkts der Linie mit der Zahnvorlage (7) als Handle (11) und des Schnittpunkts mit der Oberfläche des Restzahns (1) als Target (12); und
   - automatisches Verformen der Zahnvorlage (7).

2. Das computerimplementierte Verfahren nach Anspruch 1, wobei der Punkt auf der Oberfläche der Zahnvorlage (7) ein Eckpunkt oder ein Punkt innerhalb eines Dreiecks eines Vielecknetzes ist, das die Oberfläche der Zahnvorlage beschreibt und wobei die Normalenrichtung bei einem Eckpunkt definiert ist durch den Mittelwert von Normalenrichtungen von Dreiecken, die besagten Eckpunkt als eine Ecke haben oder von Dreiecken, die innerhalb einer Kugel oder eines Volumens einer vordefinierten Größe um besagten Eckpunkt liegen.

3. Das computerimplementierte Verfahren nach Ansprüchen 1 oder 2, wobei die Daten der Zahnvorlage eine Vielecknetz umfassen, das die Oberfläche der Zahnvorlage beschreibt und wobei die Laplaceoberflächenverformung weiter ein Verwenden eines Handles (11) umfasst, das innerhalb eines Vielecks des Netzes der Zahnvorlage (7) liegt.

4. Das computerimplementierte Verfahren nach Ansprüchen 1 bis 3, wobei das automatische Verformen der Zahnvorlage bei der Laplaceoberflächenverformung weiter ein Bewegen des Handles (11) auf das Target (12) zu umfasst.

5. Das computerimplementierte Verfahren nach Ansprüchen 1 bis 4, wobei die Laplaceoberflächenverformung weiter ein automatisches iteratives Durchführen der Verformung der Zahnvorlage (7) umfasst.

6. Das computerimplementierte Verfahren nach Anspruch 5, wobei das automatische iterative Durchführen der Verformung der Zahnvorlage (7) ein Handlegewicht verwendet, das zunimmt, wenn der Interationsprozess voranschreitet, vorzugsweise beginnend mit einem vordefinierten minimalen Handlegewicht.

7. Das computerimplementierte Verfahren nach Anspruch 6, wobei das Verfahren weiter den Schritt umfasst von einem Definieren des Handlegewichts für die Verformung als ein Produkt, das ein globales Gewicht, das mit jedem Iterationsschritt zunimmt und eines oder beides von:

   - einem Abstandsgewicht, das mit ansteigenden Abständen zwischen dem Target (12) und dem Handle (11) abnimmt, wobei die Abhängigkeit des Abstandsgewichts von dem Abstand mit jedem Iterationsschritt variieren kann; oder
   - einem Winkelgewicht, das von dem Winkel zwischen der Normalenrichtung des Targets (12) und der Normalenrichtung des Handles (11) abhängt, umfasst.

8. Das computerimplementierte Verfahren nach Ansprüchen 5 bis 7, wobei das Verfahren weiter den Schritt von einem automatischen Extrahieren eines Anteils der Zahnvorlage durch digitales Schneiden der verformten Zahnvorlage entlang einer Präparationsgrenze (4) umfasst.

9. Das computerimplementierte Verfahren nach Anspruch 8, wobei das Verfahren weiter den Schritt umfasst von einem automatischen Kombinieren von Daten, die den ausgeschnittenen verformten Zahnvorlagenanteil beschreiben mit Daten, die die Oberfläche des Restzahns (1) innerhalb der Präparationsgrenze (4) darstellen, um Daten eines dreidimensionalen Entwurfs des Zahnersatzes bereitzustellen.

10. Das computerimplementierte Verfahren nach Anspruch 9, wobei das Verfahren weiter den Schritt umfasst von einem automatischen Hinzufügen eines Zementspalts (13) und/oder eines Abstandsspalts (14) zu den Daten, die die Oberfläche des Zahnersatzes darstellen, die in Kontakt mit dem Restzahn (1) wäre, die sogenannte untere Oberfläche (2).

11. Das computerimplementierte Verfahren nach Anspruch 10, wobei das Hinzufügen durchgeführt wird durch automatisches Anwenden eines Offsets entlang der Normalenrichtungen von Punkten, wie zum Beispiel Eckpunkten, der unteren Oberfläche (2), wobei die Normalenrichtungen vorzugsweise über eine definierte Fläche um jeden Punkt gemittelt sind.

12. Das computerimplementierte Verfahren nach Ansprüchen 1 oder 2, wobei das Verfahren weiter den Schritt umfasst von einem automatischen Positionieren der Zahnvorlage (7) in Hinblick auf den Restzahn (1) durch Ausrichten des Restzahns (1) und der Zahnvorlage (7), um in bukkaler Richtung und in okklusaler Richtung übereinzustimmen.

13. Das computerimplementierte Verfahren nach Anspruch 12, wobei das Verfahren weiter den Schritt umfasst von einem automatischen Skalieren der Zahnvorlage (7) in bukkaler Richtung und in Richtung der mesial-distalen Achse entsprechend der horizontalen Ausdehnung der präparierten Oberfläche des Restzahns (1), wobei vorzugsweise kein Skalieren in okklusaler Richtung vorgenommen wird.

## Revendications

1. Procédé informatique pour concevoir de manière numérique une prothèse dentaire pour une dent d'appui (1), pour lequel la dent d'appui (1) est décrite par des données sur la dent d'appui (1), les données sur la dent d'appui (1) étant obtenues en scannant un modèle dentaire de la dent d'appui (1) ou en scannant directement une dent d'appui d'un patient et pour lequel un gabarit de dent (7) est décrit par des données sur le gabarit de dent (7), le gabarit de dent (7) représentant une représentation numérique d'une dent générique, le procédé comprenant l'étape consistant à :

    - déformer automatiquement le gabarit de dent (7) au moyen d'une déformation de surface laplacienne, de telle sorte qu'une partie préparée de la dent d'appui (1) soit couverte par une partie du gabarit de dent (7) ; **caractérisé en ce que** :

       la déformation de surface laplacienne comprend les étapes consistant à :

    - générer automatiquement une ligne passant par un point sur la surface de la dent d'appui (1) ou du gabarit de dent (7) et qui soit dirigée suivant la direction normale audit point, qui est la direction normale au plan tangent audit point ou à la surface de la dent d'appui (1) ou du gabarit de dent (7) ;
    - lorsque la ligne coupe le gabarit de dent (7) et la surface de la dent d'appui (1), choisir automatiquement le point d'intersection de la ligne avec le gabarit de dent (7) comme poignée (11) et le point d'intersection avec la surface de la dent d'appui (1) comme cible (12) ; et
    - déformer automatiquement le gabarit de dent (7).

2. Procédé informatique selon la revendication 1, pour lequel le point sur le surface du gabarit de dent (7) est un sommet ou un point à l'intérieur d'un triangle d'un maillage polygonal qui décrit la surface du gabarit de dent et pour lequel la direction normale à un sommet est définie par la moyenne des directions normales de triangles ayant ledit sommet comme angle ou de triangles s'étendant à l'intérieur une sphère ou un volume d'une taille prédéfinie autour dudit sommet.

3. Procédé informatique selon les revendications 1 ou 2, pour lequel les données sur le gabarit de dent comprennent un maillage polygonal qui décrit la surface du gabarit de dent et pour lequel la déformation de surface laplacienne comprend en outre l'utilisation d'une poignée (11) s'étendant à l'intérieur d'un polygone du maillage du gabarit de dent (7).

**4.** Procédé informatique selon les revendications 1 à 3, pour lequel la déformation automatique du gabarit de dent au moyen de la déformation de surface laplacienne comprend en outre un déplacement de la poignée (11) vers la cible (12).

**5.** Procédé informatique selon les revendications 1 à 4, pour lequel la déformation de surface laplacienne comprend en outre une exécution itérative automatique de la déformation du gabarit de dent (7).

**6.** Procédé informatique selon la revendication 5, pour lequel l'exécution itérative automatique de la déformation du gabarit de dent (7) utilise une pondération de poignée qui est augmentée à mesure que progresse le processus d'itération, commençant de préférence avec une pondération de poignée minimale prédéfinie.

**7.** Procédé informatique selon la revendication 6, pour lequel le procédé comprend en outre l'étape consistant à définir la pondération de poignée pour la déformation, comme étant un produit comprenant une pondération globale augmentant à chaque étape de l'itération et l'une ou l'autre ou les deux pondérations suivantes :

- une pondération de distance diminuant à mesure que les distances augmentent entre la cible (12) et la poignée (11), pour lequel la dépendance de la pondération de distance à la distance peut varier à chaque étape de l'itération ; ou
- une pondération d'angle dépendant de l'angle entre la direction normale de la cible (12) et la direction normale de la poignée (11).

**8.** Procédé informatique selon les revendications 5 à 7, pour lequel le procédé comprend en outre l'étape consistant à extraire automatiquement une partie du gabarit de dent en coupant numériquement le gabarit de dent déformé suivant une marge de préparation (4).

**9.** Procédé informatique selon la revendication 8, pour lequel le procédé comprend en outre l'étape consistant à combiner automatiquement des données représentant la partie du gabarit de dent déformé coupé avec des données représentant la surface de la dent d'appui (1) dans la marge de préparation (4) afin de fournir des données sur une conception tridimensionnelle de la prothèse dentaire.

**10.** Procédé informatique selon la revendication 9, pour lequel le procédé comprend en outre l'étape consistant à ajouter automatiquement un intervalle du ciment (13) et/ou un intervalle de pièce d'espacement (14) aux données représentant la surface de la prothèse dentaire qui serait en contact avec la dent d'appui (1), la surface dite inférieure (2).

**11.** Procédé informatique selon la revendication 10, pour lequel l'adition est effectuée en appliquant automatiquement un décalage suivant les directions normales de points, tels que des sommets, de la surface inférieure (2), pour lequel de préférence des moyennes sont faites des directions normales autour d'une région définie autour de chaque point.

**12.** Procédé informatique selon les revendications 1 ou 2, pour lequel le procédé comprend en outre l'étape consistant à positionner automatiquement le gabarit de dent (7) par rapport à la dent d'appui (1) en alignant la dent d'appui (1) et le gabarit de dent (7) afin qu'ils coïncident dans la direction buccale et dans la direction occlusale.

**13.** Procédé informatique selon la revendication 12, pour lequel le procédé comprend en outre l'étape consistant à mettre à l'échelle le gabarit de dent (7) dans la direction buccale et en direction de l'axe mésio-distal suivant l'étendue horizontale de la surface préparée de la dent d'appui (1), pour lequel de préférence aucune mise à l'échelle dans la direction occlusale n'est effectuée.

FIG. 1

FIG. 2

FIG. 3

FIG. 4a

FIG. 4b

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. STEINBRECHER et al.** Dental inlay and onlay construction by iterative Laplacian surface editing. *Eurographics Symposium on Geometry Processing 2008,* 02 July 2008, vol. 27 (5), 1441-1447